# EUROPEAN PATENT SPECIFICATION

(11) **EP 1 076 977 B1**
(45) Date of publication and mention of the grant of the patent: **09.08.2006**
(21) Application number: 99947061.0
(22) Date of filing: 19.04.1999
(51) Int. Cl.: H04L 29/06

(54) **A (GSM-GPRS) NETWORK WITH INTERNET PROTOCOL COMBINED FUNCTIONALITY**
GSM-GPRS-NETZ UND KOMBINIERTE INTERNETPROTOKOLL-FUNKTIONALITÄT
RESEAU (GSM/GPRS) A FONCTIONNALITE COMBINEE AU PROTOCOLE INTERNET

(30) Priority: 28.04.1998 SE 9801524; 04.08.1998 SE 9802666
(43) Date of publication of application: 21.02.2001
(73) Proprietor: TELIA AB, 123 86 Farsta (SE)
(72) Inventor: HUBBARD, Elisabeth, S-142 43 Skogas (SE)
(74) Representative: Hopfgarten, Nils
(86) International application number: PCT/SE1999/000621
(87) International publication number: WO 1999/056445

(56) References cited:
- WO-A1-97/15994
- WO-A1-97/26739

## Description

The present invention relates to a cellular mobile radio transmission system for transmission of speach and data traffic having a network (GSM/GPRS) with functionality which is related to distribution or keys for authorisation, authentication and ciphering, subscriber information handling and CDR generation according to the preamble of claim 1. The invention also relates to a corresponding method of transmitting date in a cellular mobile radio transmission system according to the preamble of claim 11.

Since GSM (Global System for Mobile communication) was introduced in the Nordic countries in 1992, penetration has reached as high as 40 % - and is still increasing rapidly. However, this also means that large investments have been made in this system during those years. GSM is primarily a system for speech communication, which makes up 98 % of the total traffic. Data services exist, but are slow, inefficient and expensive since they are run on circuit switched connections.

In WO 97 26739 a digital mobile communication system is described having a packet radio system implemented by employing the radio interface of the mobile communication network. The packet radio system comprises packet radio support nodes, SGSN, connected to the mobile communication network, as well as gateway support nodes, GGSN, for providing an inter-connection to an external packet data network. The support nodes are connected to an intra-operator packet switched backbone network. The SGSN and the GGSN collect charging information on usage of the radio interface and the data network. The system is also provided with a billing gateway support node, BGGSN, connected to the backbone network to receive user-specific charging information collected by the other support nodes. The system is particularly well applicable to implementing a GPRS in a GSM system.

WO 97 15994 discloses a way of avoiding collisions in time divided two-way radio communication, in which messages are transmitted in a first communication direction in a first time slot and in a second opposite communication direction in a second time slot.

In the year 2000, GSM will be enhanced with a general packet data service (GPRS), which uses the same radio access as GSM together with a new core network, based on IP. A maximum of about 150 kbps can be delivered, but the actual bandwidth will be significantly lower due to the presence of other users and the quality of the radio connection. Databases and servers containing subscriber data, equipment data, short message handling, etc. already in operation for the GSM system will be reused for GPRS.

Two years later, in 2002, UMTS (Universal Mobile Telecommunication System) will be taken into operation, delivering up to 2 Mbit/s over radio with full mobility. Contrary to GPRS, the UMTS radio access network will be built from scratch and existing core networks will be modified and reused to a large extent. For the initial phase of UMTS, the GPRS and GSM core networks are the most interesting candidates because of their capabilities to handle mobile terminal and users.

UMTS will support mixed services, which means everything from Internet access to multimedia conferencing. Judging from how fixed Internet access presently is booming, one is tempted to believe that mobile Internet access will become equally popular. In addition, taking into account the development of IP telephony during the last year and the fact that video standards like H.323 [H.323] are being developed for IP networks, it is quite possible that an IP based network is the most future proof solution for UMTS. When constructing public mobile networks, one has to keep in mind that radio resources are scarce and that these networks are expensive to operate, and hence, it is necessary for the operator to have the means to charge the users for services that they use. In the near future, it is doubtful that this requirement can be fulfilled by (Mobile)IP networks. Operators, who have large investments in GSM and GPRS systems, could, however, reuse parts of those to complement the shortcomings of IP networks.

GSM and its future packet data service, GPRS, has an advanced system for
- authorisation and authentication of users/terminals, including key distribution
- ciphering over radio, including key distribution
- subscriber information handling
- CDR generation
through the VLR functionality in the MSC and the SGSN respectively and through the HLR and as well as other data bases.

The GPRS backbone is, however, not optimal because of its many successive protocol layers, which results in long delays and large overhead.

The Internet Protocol is simple, flexible and optimized for transporting data through networks. Enhanced with MobileIP for handling mobility, it could be used as a core network for mobile systems, i.e. the mobile user could get direct access to the Internet without passing through an additional network, like GPRS backbone. However, IP lacks support for subscriber handling and charging. Authentication and encryption is supported to ensure integrity and confidentiality but the key distribution, which is not standardized, is still a problem. The invention offers a solution of the security problem and form an efficient as well as secure core network for mobile users.

The solution according to the invention is obtained by a system according to claim 1 and a method according to claim 11. UMTS is presently being standardardized and its core network will, in an initial phase, be based on the GPRS core network.

Advantages to the invention is that is possibly to use the fixed network in a more efficient way, when the GPRS backbone, in a later stage, is replaced by a pure IP network for transporting user data under the condition that the security issues are solved.

Embodiments of the invention will now be described, by way of example, with reference to the accompanying drawings, in which:
Figure 1 The basic GSM architecture.
Figure 2 Overview of the GPRS logical structure
Figure 3 The GPRS Protocol architecture. The GPRS backbone is shaded
Figure 4. General UMTS Architecture with the reference points currently identified in UMTS, March1998 [UMTS23.01].
Figure 5. Using IP for service transport end-to-end.
Figure 6. Scenario with Mobile IP support for intra UTRAN mobility and modified SGSN's to handle subscriber data etc.
Figure 7. Scenario with Mobile IP supporting roaming in foreign networks.
Figure 8. Evolution scenario for UMTS. The IWU-Gb and IWU-Gbu are taken from [umts23.20].

A glossary of the abbreviations used in this patent specification is set out below to facilitate an understanding of the present invention.
- AN: Access Network
- AUC: Authentication Center
- BSS: Base Sub System
- CN: Core Network
- DHCP: Dynamic Host Control Protocol
- ETSI: European Telecommunication Standardisation Institute
- GGSN: Gateway GPRS Support Node
- GPRS: General Packet Radio Service
- GTP: GPRS Tunneling Protocol
- GSM: Global System for Mobile communication
- HA: Home Agent
- HLR: Home Location Register
- SP: Service Provider
- IP: Internet Protocol
- IWU: InterWorking Unit
- MS: Mobile Station
- MSC: Mobile Services Switching Center
- MT: Mobile Termination
- PLMN: Public Land Mobile Network
- PSTN: Public Switched Telephone Network
- QoS: Quality of Service
- SGSN: Service GPRS Support Node
- SIM: Subscriber Identity Module
- SP: Service Provider
- TCP: Transport Control Protocol
- UDP: User Datagram Protocol
- UE: User Equipment
- UMTS: Universal Mobile Telecommunications System
- UTRAN: UMTS Terrestrial Radio Access Network
- VLR: Visitor Location Register

UMTS, the third generation cellular system currently being specified by ETSI, is the first cellular system to be optimized for extensive use of data services mixed with speech. One solution is to use the IP protocol for the transport of services across core and access networks. Using a MobileIP core network would allow roaming between the radio access networks in a rather straightforward way. However, radio resources are scarce and public cellular systems are expensive to operate, and hence, it is of great importance that the users can be properly charged for services that they use. In the near future, it is doubtful that this requirement can be fulfilled by (Mobile)IP networks. Instead, parts of GSM/GPRS could be reused to complement the functionality of IP networks.

In this description, a network scenario is presented where the UMTS core network is based on Mobile IPv6, which supports roaming and possibly also handover between UTRAN's. Since the GSM/GPRS system already has several key functions to handle mobile users, e.g. subscriber data, access control, keys for encryption over radio, accounting information, the GPRS SGSN node should be reused to handle the setup of lower layer communication, including authentication and check of subscriber profile etc. A successful lower layer setup should be required in order to obtain a MobileIP care-of address. The mechanisms for distributing authorization and encryption keys in GSM/GPRS can also be utilized for distributing keys for the IPsec protocol.

Examples, describing how MobileIP and part of the GPRS core network could operate with a UMTS radio access network are presented later on in the description. The following three sections will give a brief introduction to those parts of GSM, GPRS, UMTS and IP that are relevant for this study. These are followed by a short discussion on using IP end-to-end in mobile networks, before presenting the examples.

### GSM

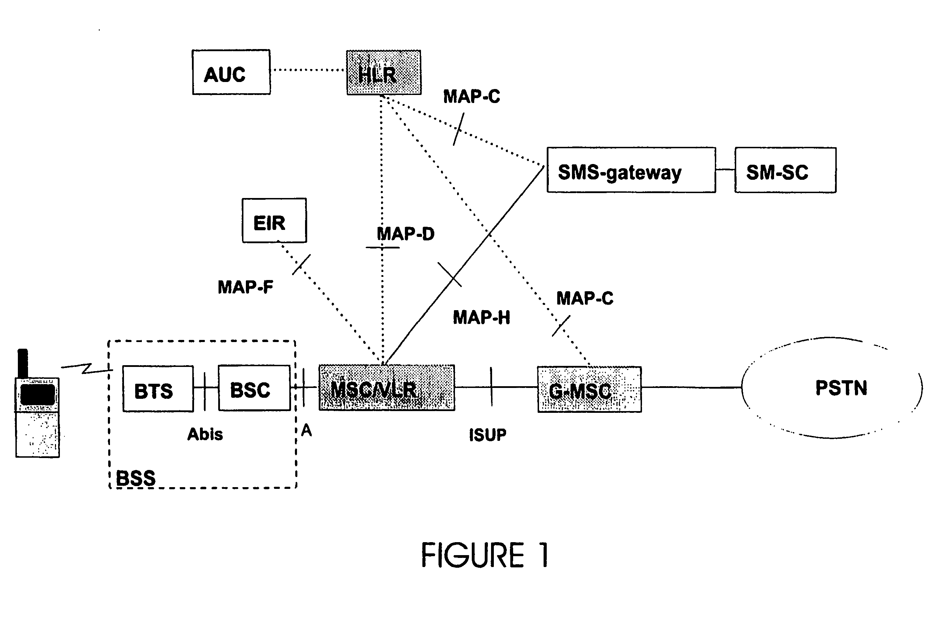

GSM is a digital cellular system, primarily designed and used for speech communication[gsm]. A few data services and a rich set of supplementary services are standardized. The GSM network is built up of BSS's (Base Sub System), MSC/VLR's(Mobile Services Switching Center/Visitor Location Register), HLR's and a few other data bases and service nodes as illustrated in figure 1. The BSS contains base stations and base station controllers. Each terminal is equipped with a subscriber identity modules (SIM), which is a smart card containing, among other things, the user identity.

The MSC is the heart of the GSM system. It's duty is to:
- perform switching
- detect new mobile terminals in its service area and perform authentication and authorization procedures with these terminals
- collect information about users from their HLR and store the information in the VLR
- register location updates and store them in the VLR
- assist when handover takes place between MSC's
- create records for charging

Frequently, the VLR is integrated in the MSC. The Gateway-MSC is an MSC with additional functionality to handle traffic to and from the fixed network. For incoming traffic the G-MSC asks the HLR for routing information to the current MSC of the user.

The MSC communicates with databases like the home location register (HLR) and the equipment identity register (EIR) via an SS7 based signaling system called MAP (Mobile Application Part).

The HLR stores the identity and user data of all the subscribers belonging to the area of the related G-MSC. The IMSI (International Mobile Subscriber Number), the phone number, service profile etc. are permanently stored in the HLR. For routing of incoming traffic, the user's current VLR and forwarding information is stored temporarily. Authentication and ciphering keys, which are derived in the AUC (AUthentication Center) are also available from the HLR.

Authentication and authorization of the terminal takes place each time a connection is setup, i.e. for each call. The authentication procedure is based on the authentication algorithm, which is stored on the SIM card and in the AUC. The AUC picks a random number from which the algorithm creates the authentication key. The random number and the key are then passed on to the HLR and the VLR, which sends the random number to the mobile terminal. The SIM card uses the random number to produce the key, which is returned to the network via the terminal. A comparison of the key received from the terminal and the one originating from the AUC will tell if the terminal is the expected one. The same method is used for giving the terminal the encryption key, but a different algorithm is used. This has the advantage that the encryption key is never sent over radio where it could easily be picked up by anyone. These algorithms are known nowhere outside the home network. On the terminal side, the algorithms are embedded in the SIM card and are available neither to the terminal nor to the user.

### GPRS

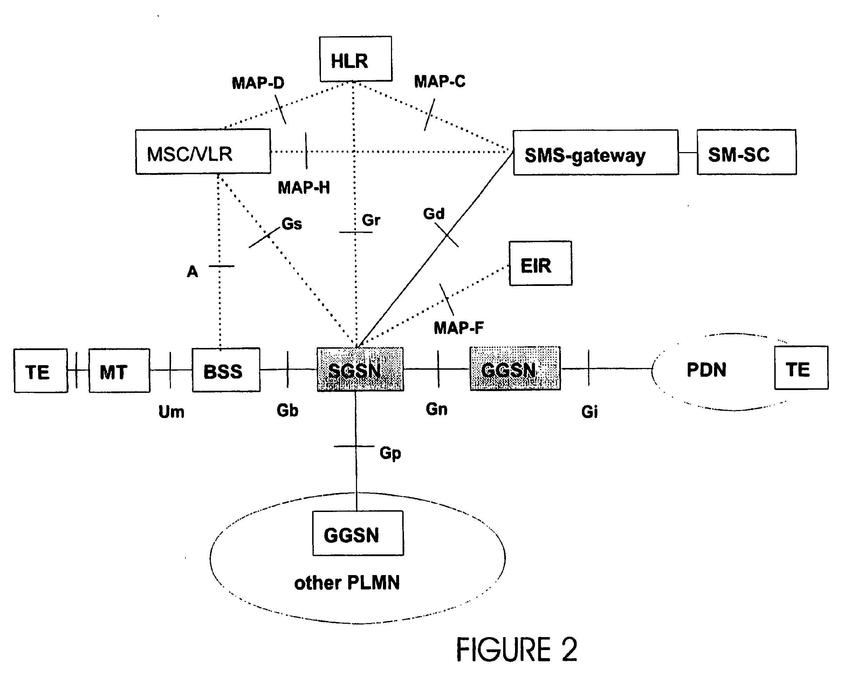

GPRS (General Packet Radio Service) [GSM 03.60] is a packet switched service which, to a large extent, is based on a combination of GSM infrastructure, IP technology and a set of new functionality. Figure 2 describes the overview of the GPRS logical architecture. The main advantage of GPRS is that the limited radio resource is used only when there is data to transmit. There are two kinds of support nodes in the backbone, SGSN's (Service GPRS Support Node) and GGSN's (Gateway GPRS Support Node).

The main functions of the SGSN are to:
- perform authentication and other procedures to let new terminals connect to its service area
- send/receive data packets to/from the GPRS mobile
- keep record of the mobile's location inside its service area
- route data packets from one GPRS operator to another
- produce charging data records for the charging and billing system
The SGSN communicates with the HLR, the EIR, the SMS center etc. via a GPRS version of MAP.

The main functions of the GGSN are to:
- route data packets from one GPRS operator to another
- route mobile terminated data packets to appropriate SGSN where the mobile is currently located
- act as a gateway between GPRS network and external data networks (IP, X.25, etc.)
- handle de/encapsulation of user data protocol packets when communicating with external data networks.
- produce charging data records for the charging and billing system

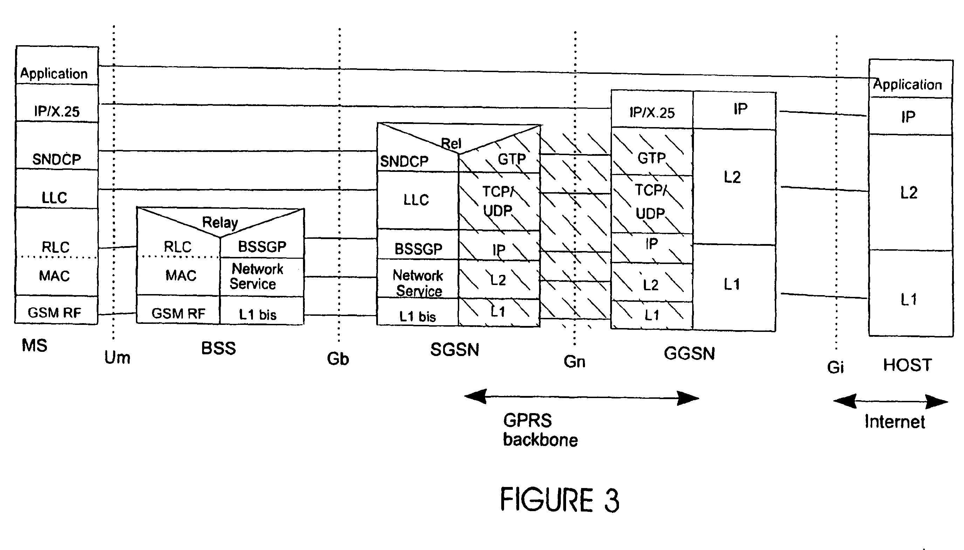

GPRS Tunneling Protocol, GTP[gprs09.60], which is a specific to GPRS, tunnels user data packets between SGSN's and GGSN's. This enables the network to support transmission of several packet data protocols, even if the protocol is not supported by all SGSN's. GTP also transports signaling data for mobility handling between the nodes. As illustrated in figure 3, GTP is placed on top of the transport IP and UDP layer in the protocol stack. By using a non-standard protocol to transport user data, it is probably more difficult for users to do anything harmful to the system. On the other hand, it makes it impossible to use standard IP tunneling mechanisms without special solutions for GTP. An example is future resource reservation protocols, which are likely to operate in combination with standard IP-in-IP tunneling.

### UMTS

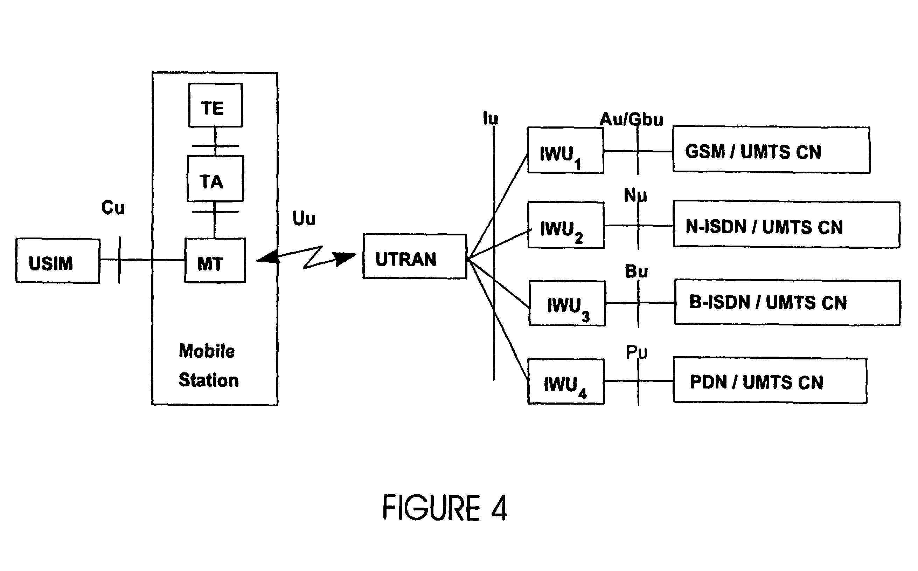

The UMTS system, which currently is under specification in ETSI, is based on a new UMTS Terrestrial Radio Access Network (UTRAN) and existing, but evolved, core networks (CN) such as IP, GSM/GPRS CN or ATM [umts23.01]. The interworking units (IWU) adapt the different CN's to the Iu interface if needed. The GRAN and the CN's may evolve independently of each other, while the IWU's follow the evolution of CN's and AN's to insure interconnection between these parts. For flexibility, the user equipment consists of different modules of which one is a UMTS version of the GSM SIM card, the USIM. A general view of the logical modules and reference points is shown in figure 4.

The UTRAN will probably have an internal mobility management system, which means that, for routing, the CN only needs to keep track of in which UTRAN the mobile terminal is located. The CN will have to handle the subscriber information management, basic call handling, paging initiation, service feature analysis, security issues, charging, etc. Evolved versions of the GSM and GPRS CN's are foreseen for the initial phase of UMTS [umts23.20].

Primarily, the IWU will deal with translation of protocol messages and network parameters, in those cases where the protocols in the CN and in the UTRAN are different. If the CN does not support functionality required for a UMTS CN, the IWU could contain intelligence to enhance the CN. The choice of protocols over the Iu interface has not yet been made.

### The Internet Protocol

The Internet Protocol, IP, is designed to route IP packets across networks and network boundaries in a flexible and efficient way. Because of its popularity, many services have been developed to run on top of the IP protocol. Today, it is not unusual to implement virtual IP networks within other networks based on e.g. ATM or IP, which creates extra security, but also additional overhead and processing time. The GPRS backbone is one example of such a network. Taking into account that UMTS will not be introduced until year 2002, we only consider IPv6 [ipv6] here.

MobileIPv6 [mobip] is designed to deal with "macro" mobility management, i.e. the movements of mobile nodes between different IP subnets. Routing in the Internet is based on fixed IP addresses, which depends on the subnet, through which the terminal is connected to the Internet. When connected to a foreign network, the mobile node needs a temporary address using the prefix of the visited network, a care-of address, to be able to receive packets.

Briefly, MobileIPv6 works in the following way:
- When the mobile node arrives in a foreign subnet, it acquires a care-of address using the IPv6 address autoconfiguration.
- The mobile node registers its care-of address with a router in its home subnet which acts as the node's Home Agent (HA). The home agent uses proxy Neighbor Discovery to intercept the IPv6 packets addressed to the mobile node's home address. The packets are then tunneled to the mobile node's care-of address using IPv6 encapsulation. This means that the mobile node can always be addressed by its home address, independently of which subnet it is roaming in.
- When packets, which are tunneled from the home agent, arrive at the mobile node immediately sends a message, which includes its current care-of address, to the communicating node. After receiving such a packet, the communicating node will send packets directly to the care-of address. This way, MobileIPv6 inherently supports optimized routing, which minimizes the load on the home subnet. When changing care-of address, the mobile node sends its new care-of address to its home agent and all other nodes that it is communicating with.

### Using IP for Service Transport Across Different Networks

Traditionally, telecom systems have been developed with one kind of transmission, for one or a few specific and well specified services which need support by the network. GSM is one example of these kind of systems where the time-to-market for new services is too long to be competitive.

UMTS should support mixed services, services provided by third-party, etc and new services must be easy and fast to implement. One possible solution is to use IP as a common format to deliver services end-to-end. This does not necessarily mean that the IP routing mechanisms have to be utilized in all the different networks. For example, the UTRAN has to manage micro mobility, which includes frequent and fast movements between base stations, which Mobile IP is not designed to handle. Instead, the IP layer could be provided a point-to-point connection between the IWU and the mobile terminal while the UTRAN handles the changing connections underneath.

The main advantages of this approach is that already today, an abundance of services and information is available on the Internet. Having direct Internet access from the mobile terminal would facilitate the convergence of fixed and mobile networks on a service level.

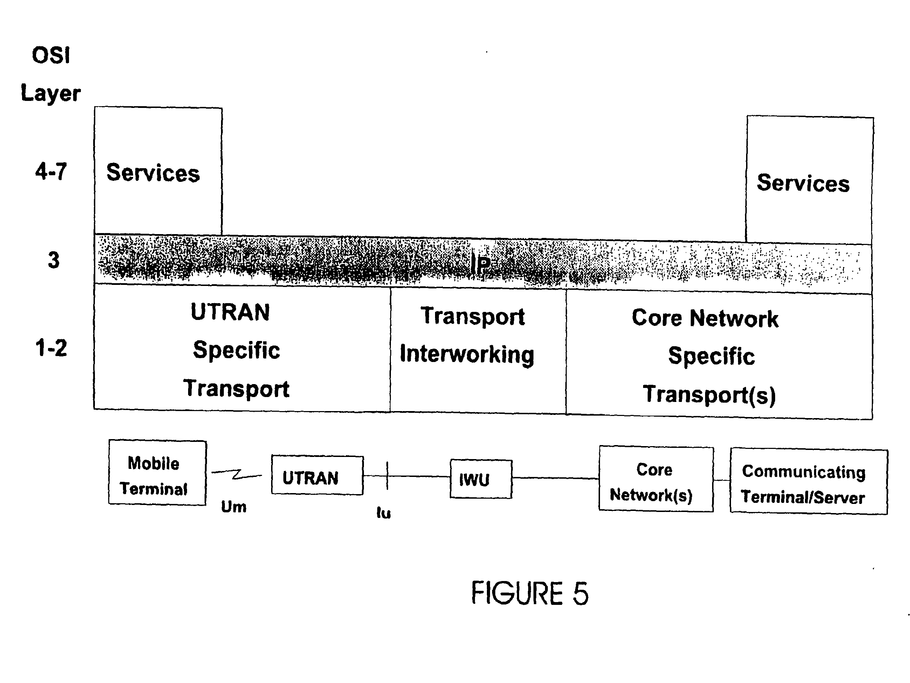

In figure 5, the end-to-end IP layer is mapped onto the UMTS architecture. The IWU would provide interworking between the lower layers of the core network and the access network.

### GSM, IP and Broadband Radio Access - a Mix that Matches

As we have seen in previous sections, the UMTS UTRAN together with GSM/GPRS core networks would give us a system, which would handle mobile users excellently and provide high bandwidth connections over the radio interface. There is also support for the operator to profit from running such a network. However, neither GSM nor GPRS are designed for large volumes and the GPRS backbone is rather inefficient due to the large overhead.

On the other hand, IP is simple and flexible for transporting data through networks. Enhanced with MobileIP, which is optimized for roaming between subnets, it is an interesting UMTS core network candidate. Unfortunately, it's support for subscriber handling and charging is poor.

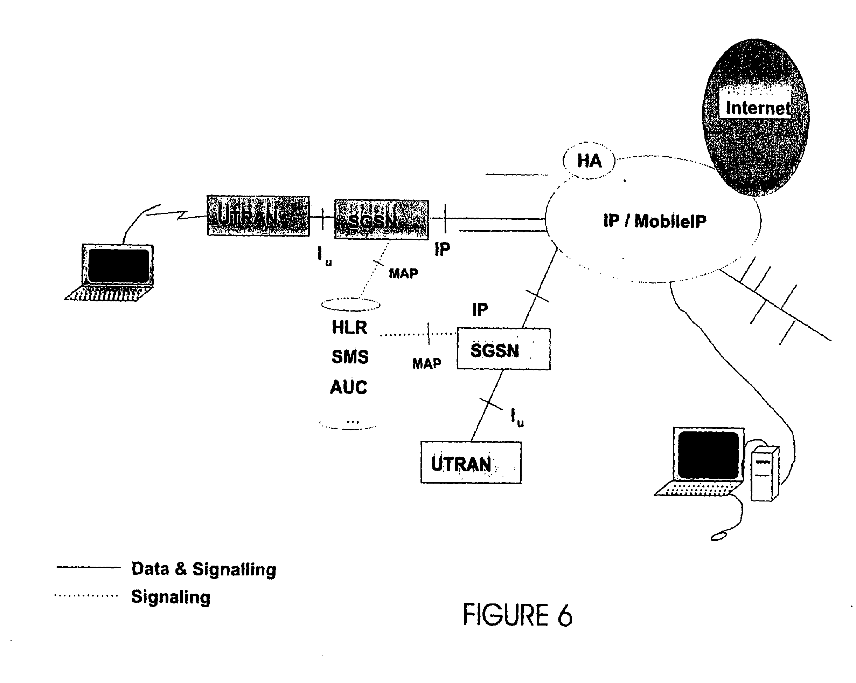

Let us therefore study how the different parts from IP, GPRS and UMTS could interwork to support mobility. First, we will study the case, which is illustrated in figure 6, where the terminal stays within its home IP network :
- The mobile terminal arrives at a new UTRAN and listens to the radio broadcast messages, which contain information about radio parameters, network and cell identity, etc. as well as information about available core networks, service providers, service capabilities etc.
- The mobile terminal sends a registration request including parameters such as identity, desired service provider etc.
- The UTRAN forwards the registration request to the SGSN, which processes it:
   - The SGSN contacts the HLR of the mobile terminal to collect data to perform an authentication procedure.
   - Once the terminal is authenticated and found to be allowed in the present UTRAN, all information over the radio interface can be encrypted. Encryption keys are obtained from the HLR. A random number is sent to the mobile which can calculate the key with an algorithm stored in the terminal. In this way, the key is not sent over the radio interface.
   - At this point, the terminal also gets registered in the UTRAN along with location data and radio specific information.
- Now, the terminal can start communicating over the IP layer. The terminal listens to router advertisement messages and solicit the nearest DHCP server [dhcp] to obtain a configuration parameters and a care-of-address. It is assumed that only stateful address configuration will be used, since it gives a better support for registration of the terminals than stateless. Logically, we include the IP functionality in the SGSN and call the entire unit SGSN' and the HLR records include the care-of address of the mobile terminal.
- The mobile terminal will then contact its home agent to register its new care-of address according to standard MobileIP.
- The home agent has to accept or reject the registration of a care-of address. Before making a decision, the home agent could contact the HLR (via a new interface) to obtain information that this terminal is properly registered. In addition, the keys needed for using the IPsec authentication header and/or the encapsulation security payload [ipsec] could be obtained from the HLR. The mobile terminal can derive its keys from information on its USIM in the same way as in the GSM system.
- While the terminal is connected and transmits data, charging data records are produced by the SGSN'. Systems for billing and customer handling, already in operation for GSM, can easily be used also for UMTS.

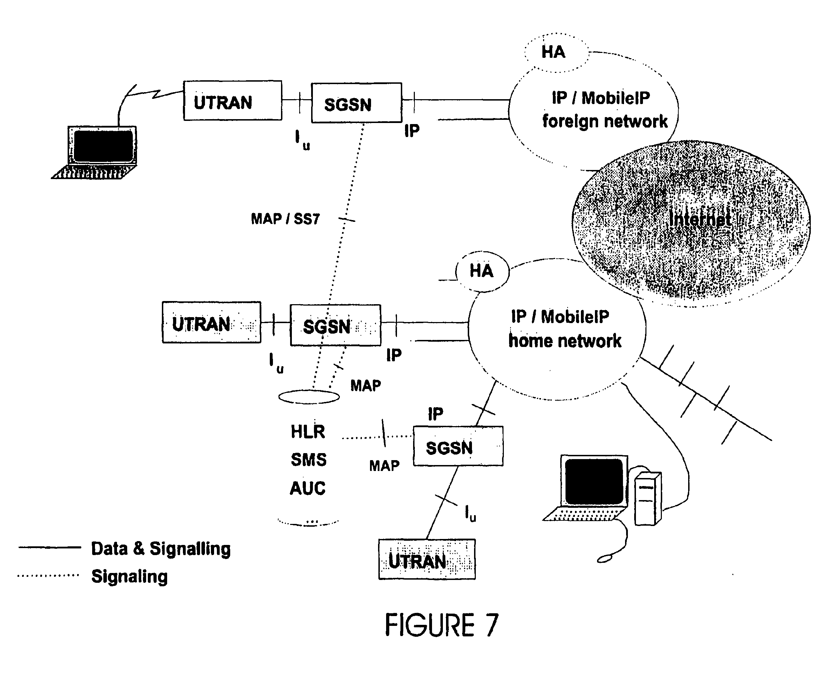

In figure 7, the mobile terminal is roaming in a foreign network. The procedure for registering in that network is very similar to the home network case, the only difference being that the visited SGSN' contacts the HLR in the terminal's home network, either via the international SS7 network or by tunneling the MAP protocol messages through the Internet. The mobile terminal registers with the same home agent as before.

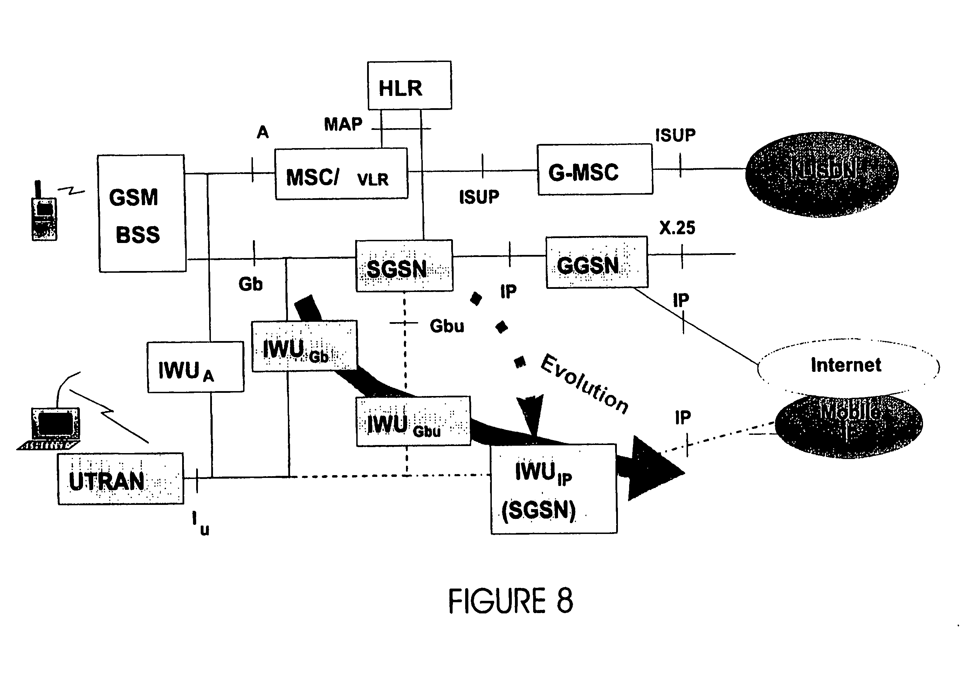

The ETSI group SMG12 works with UMTS architecture and evolution scenarios[umts23.30]. One idea for evolution is depicted in figure 8. The most straightforward way to implement UMTS with an already existing GPRS network is to attach the UTRAN to the Gb interface via the IWU-Gb. However, if the UTRAN will be based on IP, a new IP based interface, Gbu, should be opened up at the SGSN, requiring an IWU-Gbu. In this description we have gone one step further and transformed the SGSN into an IWU for a core network based directly on standard IP and MobileIP.

UMTS, the third generation cellular system which is currently being specified by ETSI, is the first one to be optimized for extensive use of data services mixed with speech. One solution is to use the IP protocol for the transport of services across core and access networks. Using a MobileIP core network would allow roaming between URAN's in a rather straightforward way. However, radio resources are scarce and public cellular systems are expensive to operate, and hence, it is of great importance that the users can be properly charged for the services they are using. In the near future, it is doubtful that this requirement can be fulfilled by (Mobile)IP networks. Instead, parts from GSM/GPRS could be reused to complement the functionality of IP networks.

In this description, a network scenario is presented where the UMTS core network is based on Mobile IPv6, which supports roaming and possibly also handover between UTRAN's. Since the GSM/GPRS system already has several key functions to handle mobile users, e.g. subscriber data, access control, keys for encryption over radio, accounting information, the GPRS SGSN node should be reused to handle the setup of lower layer communication, including authentication and check of subscriber profile etc. A successful lower layer setup should be required in order to obtain a MobileIP care-of address. The mechanisms for distributing authorization and encryption keys in GSM/GPRS can also be utilized for distributing keys for the IPsec protocol.

## Claims

1. Cellular mobile radio transmission system for transmission of speech and data traffic, said system having a first terrestrial radio access network linking a plurality of mobile terminals (TE) to a fixed core network via a plurality of base stations (BTS) said first terrestrial radio access network being a Global System for Mobile Communication, GSM, General Packet Radio Service, GPRS, radio access network with functionality related to distribution of keys for authorisation, authentication and ciphering, subscriber information handling and CDR generation, **characterized in that** the system is adapted to use Internet Protocol, IP, for delivery of data based services and includes a second terrestrial radio access network, which is an Universal Mobile Telecommunications System, UMTS, Terrestrial Radio Access Network, UTRAN, **in that** said UTRAN is linked to said fixed core network via a Service GPRS Support Node, SGSN, which is arranged to communicate with a Home Location Register, HLR, to collect data to calculate keys for authorisation, to perform authentication and ciphering, and to handle subscriber information and CDR generation, **in that** said GSM/GPRS radio access network is linked to a N-Integrated Services Digital Network, N-ISDN, core network via a Mobile Service Switching Center, MSC, having a Visitor Location Register, VLR, for corresponding visitor data collection for calculating keys for authorisation, performing authentication and ciphering, and handling subscriber information and CDR generation, und a G-MSC and to Internet via a SGSN and a Gateway GPRS Support Node, GGSN, **in that** said MSC and said SGSN are adapted to operate both with UMTS and GSM/GPRS, and **in that** said UTRAN is connected to an A-interface (A) via an InterWorking Unit, IWU_{A}, for combining said functionality of the GSM,GPRS network with the IP for transporting data and handling macro mobility.

2. System according to claim 1, **characterized in that** said UTRAN is connected to a Gb-interface (Gb) via an IWU_{Gb}.

3. System according to claim 2, **characterized in that** an UTRAN based on IP is connected to an IP based Gbu-interface (Gbu) via an IWU_{Gbu}.

4. System according to any one of the preceding claims, **characterized in that** the functions of said SGSN include performance of verification and other procedures permitting a mobile terminal (TE) to get access to a range of services, transmission and receipt of data packets to/from a mobile GPRS terminal, maintenance of a recordal of the position of a mobile terminal within a service region, routing of data packets between GPRS operators, and production of data recordings for debiting.

5. System according to any one of the preceding claims, **characterized in that** said functions of said SGSN include routing of data packets between GPRS operators, routing of mobile terminated data packets to a suitable SGSN, provision of a gateway between GPRS networks and external data networks including IP and X.25, encapsulation and removal of encapsulation of protocol packets and user data, and production of data recordings for debiting.

6. System according to any one of the preceding claims, **characterized in that** the system is adapted for use of IP via core- and access networks for delivery of data based services.

7. System according to any one of the preceding claims, **characterized in that** the system is adapted to transmit data via said core network by using a protocol "Mobile IP".

8. System according to claim 7, **characterized in that** the system is adapted to send data over said core network by using a protocol "Mobile Ipv6".

9. System according to any one of the preceding claims, **characterized in that** said SGSN is adapted to handle set up of communication in lower layers.

10. System according to any one of the preceding claims, **characterized in that** at least one of the mobile terminals is allotted a "care of" address for receipt of data.

11. Method of transmitting data in a cellular mobile radio transmission system for transmission of speech and data traffic, said system having a terrestrial radio access network linking a plurality of mobile terminals (TE) to a fixed core network via a plurality of base stations (BTS) said terestrial radio access network being a Global System for Mobile Communication, GSM, General Packet Radio Service, GPRS, radio access network with functionality related to distribution of keys for authorisation, authentication and ciphering, subscriber information handling and CDR generation, **characterized in that** Internet Protocols, IP, are used for delivery of data based services, **in that** both Universal Mobile Telecommunications System, UMTS, Terrestrial Radio Access Network, UTRAN, and GSM/GPRS are used for radio access between mobile terminals (TE) and base stations (BTS), **in that** IP are used by core and access networks for delivery of data based services, and **in that** data are sent via said core network by using a protocol "Mobile IP," said functionality of GSM/GPRS being combined with said protocol for delivery of data based services and bondling macro mobility to form an efficient and secure core network for mobile users.

12. Method according to claim 11, **characterized in that** data are sent over said core network by using a protocol "Mobile Ipv6".

13. Method according to claim 11, **characterized in that** at least one of the mobile terminals is allotted a "care of" address for receipt of data.

14. Method according to any one of the claims 11 - 13, **characterized in that** a mobile terminal is listening, when arriving in an UTRAN. for broadcast messages sent by said UTRAN and containing information about radio parameters, network and cell identity, accessible core network, available service providers and service possibilities, and **in that** said mobile terminal sends a request for recordal including the parameters mobile terminal identity and desired service provider.

15. Method according to claim 14, **characterized in that** said UTRAN forwards said request for recordal to a Service GPRS Support Node, SGSN.

16. Method according to claim 15, **characterized in that** said SGSN is collecting data from Home Location Register, HLR, of said mobile terminal, and **in that** said SGSN verifies said mobile terminal.

17. Method according to claim 16, **characterized in that** all information which is sent over said radio access network is encrypted by using encryption keys obtained from said HLR.

18. Method according to claim 17, **characterized in that** a random number is sent to a mobile terminal, and **in that** said mobile terminal is deriving an encryption key from said random number with the aid of an algorithm which is stored in said mobile terminal to avoid sending encryption keys over said radio access network.

19. Method according to claim 18, **characterized in that** said mobile terminal is contacting a Dynamic Host Control Protocol, DHCP, server and gets a "care of" addess from this server.

20. Method according to claim 18, **characterized in that** said mobile terminal is contacting a Home Agent and records its "care of" address.

21. Method according to claim 20, **characterized in that** said Home Agent is contacting said HLR and verifies that said mobile terminal is correctly recorded and obtains keys which are needed for IPsec authentication and "security payload encapsulation".

22. Method according to claim 21, **characterized in that** said SGSN is contacting said HLR via an international SS7 network.

23. Method according to claim 22, **characterized in that** said SGSN is contacting said HLR by tunnelling MAP protocol messages over Internet.

## Patentansprüche

1. Zellulares Mobilfunkübertragungssystem für Übertragung von Sprache und Datenverkehr, welches System ein erstes terrestrisches Funkzugangsnetz hat, das eine Mehrzahl von mobilen Endgeräten (TE) mit einem festen Kernnetz über eine Mehrzahl von Basisstationen (BTS) verbindet, welches erste terrestrische Funkzugangsnetz ein globales System für mobile Kommunikation, GSM, allgemeiner Paketfunkdienst, GPRS, Funkzugangsnetz mit Funktionalität ist, die sich auf die Verteilung von Schlüsseln für Berechtigung, Authentifizierung und Verschlüsselung, Teilnehmerinformationsbehandlung und CDR-Erzeugung bezieht, **dadurch gekennzeichnet, dass** das System dazu ausgebildet ist, Internetprotokoll, IP, für Lieferung von auf Daten beruhenden Diensten zu verwenden und ein zweites terrestrisches Funkzugangsnetz einschließt, das ein universelles mobiles Telekommunikationssystem, UMTS, terrestrisches Funkzugangsnetz, UTRAN ist, dass das UTRAN mit dem festen Kernnetz über einen Dienst-GPRS-Unterstützungsknoten, SGSN, verbunden ist, der dazu ausgebildet ist, mit einem Heimortsregister, HLR, zu kommuninzieren, um Daten zu sammeln, um Schlüssel für Berechtigung zu berechnen, um Authentifizierung und Verschlüsselung durchzuführen und um Teilnehmerinformation und CDR-Erzeugung zu handhaben, dass das GSM/GPRS-Funkzugangsnetz mit einem digitalen Netz N-intergrierter Dienste, N-ISDN, Kernnetz über ein mobiles Dienstvermittlungszentrum, MSC, verbunden ist, das ein Besucherortsregister, VLR, für entsprechende Sammlung von Besucherdaten zum Berechnen von Schlüsseln für Berechtigung, zum Durchführen von Authentifizierung und Verschlüsselung und zum Handhaben von Teilnehmerinformation und CDR-Erzeugung, und ein G-MSC aufweist und mit Internet über einen SGSN und einen Gateway-GPRS-Unterstützungsknoten, GGSN, verbunden ist, das das MSC und der SGSN dazu ausgebildet sind, sowohl mit UMTS als auch mit GSM/GPRS zu arbeiten, und dass das UTRAN mit einer A-Schnittstelle (A) über eine Wechselwirkungseinheit, IWU_{A} zum Kombinieren der Funktionalität des GSM/GPRS-Netzes mit dem IP zum Transportieren von Daten und zum Handhaben von Makromobilität verbunden ist.

2. System nach Anspruch 1, **dadurch gekennzeichnet, dass** das UTRAN mit einer Gb-Schnittstelle (Gb) über eine IWU_{Gb} verbunden ist.

3. System nach Anspruch 2, **dadurch gekennzeichnet, dass** ein auf IP beruhendes UTRAN mit einer auf IP beruhenden Gbu-Schnittstelle (Gbu) über eine IWU_{Gbu} verbunden ist.

4. System nach einem der vorangehenden Ansprüche, **dadurch gekennzeichnet, dass** die Funktion des SGSN Durchführung von Prüfung und anderen Prozeduren einschließt, die es einem mobilen Endgerät (TE) ermöglichen, Zugang zu einem Bereich von Diensten, Senden und Empfangen von Datenpaketen zu/von einem mobilen GPRS-Endgerät, Wartung der Aufzeichnung des Ortes eines mobilen Endgerätes innerhalb eines Dienstbereiches, Leitung von Datenpaketen zwischen GPRS-Betreibern und Erzeugung von Datenaufzeichnungen für Rechnungsstellung zu erhalten.

5. System nach einem der vorangehenden Ansprüche, **dadurch gekennzeichnet, dass** die Funktionen des SGSN Leiten von Datenpaketen zwischen GPRS-Betreibern, Leiten von mobil abgeschlossenen Datenpaketen zu einem geeigneten SGSN, Schaffen eines Gateways zwischen GPRS-Netzen und externen Datennetzen einschließlich IP und X.25, Einkapselung und Entfernung von Einkapselung von Protokollpaketen und Benutzerdaten und Erzeugung von Datenaufzeichnungen für Rechnungsstellung einschließt.

6. System nach einem der vorangehenden Ansprüchen, **dadurch gekennzeichnet, dass** das System für Verwendung von IP über Kernnetze und Zugangsnetze zum Liefern von auf Daten beruhenden Diensten ausgebildet ist.

7. System nach einem der vorangehenden Ansprüche, **dadurch gekennzeichnet, dass** das System dazu ausgebildet ist, Daten über das Kernnetz unter Verwendung eines Protokolls "mobiles IP" zu senden.

8. System nach Anspruch 7, **dadurch gekennzeichnet, dass** das System dazu ausgebildet ist, Daten über das Kernnetz unter Verwendung eines Protokolls "mobiles Ipv6" zu senden.

9. System nach einem der vorangehenden Ansprüche, **dadurch gekennzeichnet, dass** der SGSN dazu ausgebildet ist, die Einrichtung von Kommunikation in unteren Schichten zu handhaben.

10. System nach einem der vorangehenden Ansprüche, **dadurch gekennzeichnet, dass** wenigstens einem der mobilen Endgeräte eine "care of "-Adresse für Empfang von Daten zugeteilt wird.

11. Verfahren zum Übertragen von Daten in einem zellularen mobilen Funkübertragungssystem zum Übertragen von Sprache und Datenverkehr, welches System ein terrestrisches Funkzugangsnetz hat, das eine Mehrzahl von mobilen Endgeräten (TE) mit einem festen Kernnetz über eine Mehrzahl von Basisstationen (PTS) verbindet, welches terrestrische Funkzugangsnetz ein globales System für mobile Kommunikation, GSM, ein allgemeiner Paketfunkdienst, GPRS, ein Funkzugangsnetz mit Funktionalität ist, die sich auf die Verteilung von Schlüsseln für Berechtigung, Authentifizierung und Verschlüsselung, Handhabung von Teilnehmerinformation und CDR-Erzeugung bezieht, **dadurch gekennzeichnet, dass** Internetprotokolle, IP, für die Lieferung von auf Daten beruhenden Diensten verwendet werden, dass sowohl universelles mobiles Telekommunikationssystem, UMTS, terrestrisches Funkzugangsnetz, UTRAN, und GSM/GPRS für Funkzugang zwischen mobilen Endgeräten (TE) und Basisstationen (BTS) verwendet werden, dass IP durch Kern- und Zugangsnetze zum Liefern von auf Daten beruhenden Diensten verwendet werden, und dass Daten über das Kernnetz unter Verwendung des Protokolls "mobiles IP" gesendet werden, wobei die Funktionalität von GSM/GPRS mit dem Protokoll zum Liefern von auf Daten beruhenden Diensten und zum Handhaben von Makromobilität kombiniert wird, um ein effizientes und sicheres Kernnetz für mobile Benutzer zu bilden.

12. Verfahren nach Anspruch 11, **dadurch gekennzeichnet, dass** Daten über das Kernnetz unter Verwendung eines Protokolls "mobiles Ipv6" gesendet werden.

13. Verfahren nach Anspruch 11, **dadurch gekennzeichnet, dass** wenigstens einem der mobilen Endgeräte eine "care of"-Adresse für Empfang von Daten zugeteilt wird.

14. Verfahren nach einem der Ansprüche 11 - 13, **dadurch gekennzeichnet, dass** ein mobiles Endgerät, wenn es in einem UTRAN ankommt, nach rundgesendeten Meldungen horcht, die durch ein UTRAN gesendet werden und Information über Funkparameter, Netz- und Zellenidentität, zugängliches Kernnetz, zur Verfügung stehende Dienstprovider und Dienstmöglichkeiten enthält, und dass das mobile Endgerät eine Anforderung für Registrierung einschließlich der Parameter mobile Endgerätidentität und gewünschter Dienstprovider sendet.

15. Verfahren nach Anspruch 14, **dadurch gekennzeichnet, dass** das UTRAN die Anforderung für Registrierung zu einem Dienst-GPRS-Unterstützungsknoten, SGSN, leitet.

16. Verfahren nach Anspruch 15, **dadurch gekennzeichnet, dass** der SGSN Daten vom Heimortsregister, HLR, des mobilen Endgeräts sammelt und dass der SGSN das mobile Endgerät verifiziert.

17. Verfahren nach Anspruch 16, **dadurch gekennzeichnet, dass** alle Informationen, die über das Funkzugangsnetz gesendet wird, durch Verschlüsselungsschlüssel verschlüsselt wird, die von dem HLR erhalten werden.

18. Verfahren nach Anspruch 17, **dadurch gekennzeichnet, dass** eine Zufallszahl zu einem mobilen Endgerät gesendet wird und dass das mobile Endgerät einen Verschlüsselungsschlüssel von der Zufallszahl mit Hilfe eines Algorithmus ableitet, der in dem mobilen Endgerät gespeichert ist, um zu vermeiden, dass Verschiüsselungsschlüssel über das Funkzugangsnetz gesendet werden.

19. Verfahren nach Anspruch 18, **dadurch gekennzeichnet, dass** das mobile Endgerät einen Server mit dynamischem Host-Control-Protokoll, DHCP kontaktiert und eine "care of"-Adresse von diesem Server erhält.

20. Verfahren nach Anspruch 18, **dadurch gekennzeichnet, dass** das mobile Endgerät einen Heimagenten kontaktiert und seine "care of"-Adresse aufzeichnet.

21. Verfahren nach Anspruch 20, **dadurch gekennzeichnet, dass** der Heimagent das HLR kontaktiert und verifiziert, dass das mobile Endgerät richtig registriert ist und Schlüssel erhält, die für IPsec-Authentifizierung und "Sicherheitsnutzlasteinkapselung" benötigt werden.

22. Verfahren nach Anspruch 21, **dadurch gekennzeichnet, dass** der SGSN das HLR über ein internationales SS7-Netz kontaktiert.

23. Verfahren nach Anspruch 22, **dadurch gekennzeichnet, dass** das SGSN das HLR **dadurch** kontaktiert, dass es MAP-Protokollmeldungen über Internet tunnelt.

## Revendications

1. Système de transmission radio mobile cellulaire pour transmission d'un trafic vocal et de données, le dit système comprenant un premier réseau d'accès radio terrestre reliant une pluralité de terminaux mobiles (TE) à un réseau de base fixe via une pluralité de stations de base (BTS), le dit premier réseau d'accès radio terrestre étant un réseau d'accès radio de type Système Global pour Communication Mobile GSM, ou un Service Radio Général par Paquets GPRS, avec une fonctionnalité liée à la distribution de clés pour autorisation, authentification et chiffrement, traitement des informations d'abonné et génération de CDR, **caractérisé en ce que** le système est prévu pour utiliser un Protocole Internet IP, pour fourniture de services à base de données, et il comprend un deuxième réseau d'accès radio terrestre qui est un Système de Télécommunication Mobile Universel UMTS, un Réseau d'Accès Radio Terrestre UTRAN, **en ce que** le dit UTRAN est lié au dit réseau de base fixe via un Noeud de Support GPRS de Service, SGSN, qui est agencé pour communiquer avec un Registre de Position de Départ, HLR, pour collecter des données afin de calculer des clés d'autorisation, effectuer une authentification et un chiffrement, et traiter les informations d'abonné et la génération de CDR, **en ce que** le dit réseau d'accès radio GSM/GPRS est relié à un réseau de base de type Réseau Numérique de Services Intégrés-N, N-ISDN, via un Centre de Commutation de Service Mobile, MSC, ayant un Registre de Position de Visiteur, VLR, pour la collecte de données de visiteur correspondantes afin de calculer des clés pour autorisation, exécution d'une authentification et d'un chiffrement et traitement des informations d'abonné et génération de CDR et un G/MSC et à Internet via un SGSN et un Noeud de Support GPRS de Passerelle, GGSN, **en ce que** le dit MSC et le dit SGSN peuvent fonctionner à la fois avec UMTS et GSM/GPRS, et **en ce que** le dit UTRAN est connecté à une Interface-A (A) via une unité d'Intertravail IWU_{A}, pour combiner la dite fonctionnalité du réseau GSM, GPRS avec le IP pour le transport des données et la gestion de macro mobilité.

2. Système selon la revendication 1, **caractérisé en ce que** le dit UTRAN est connecté à une interface Gb (Gb) via un IWU_{Gb}.

3. Système selon la revendication 2, **caractérisé en ce qu'**un UTRAN basé sur IP est connecté à une interface Gbu basée sur IP (Gbu) via un IWU_{Gbu}.

4. Système selon une quelconque des revendications précédentes, **caractérisé en ce que** les fonctions du dit SGSN comprennent l'exécution d'une vérification et d'autres procédures permettant à un terminal mobile (TE) d'obtenir l'accès à une gamme de services, la transmission et la réception de paquets de données vers/à partir d'un terminal GPRS mobile, l'entretien d'un enregistrement de la position d'un terminal mobile à l'intérieur d'une région de service, l'acheminement de paquets de données entre des opérateurs GPRS, et la production d'enregistrements de données pour facturation.

5. Système selon une quelconque des revendications précédentes, **caractérisé en ce que** les dites fonctions du dit SGSN comprennent l'acheminement de paquets de données entre opérateurs GPRS, l'acheminement de paquets de données à terminaison de mobile à un SGSN approprié, la création d'une passerelle entre réseaux GPRS et réseaux de données externes incluant IP et X.25, l'encapsulage et la suppression d'encapsulage de paquets de protocole et de données d'utilisateur, et la production d'enregistrements de données pour facturation.

6. Système selon une quelconque des revendications précédentes, **caractérisé en ce que** le système est prévu pour utilisation de IP via des réseaux de base et d'accès pour fourniture de services à base de données.

7. Système selon une quelconque des revendications précédentes, **caractérisé en ce que** le système est prévu pour transmettre des données via le dit réseau de base par utilisation d'un protocole « Mobile IP ».

8. Système selon une quelconque des revendications précédentes, **caractérisé en ce que** le système est prévu pour envoyer des données sur le dit réseau de base par utilisation d'un protocole «Mobile Ipv6 ».

9. Système selon une quelconque des revendications précédentes, **caractérisé en ce que** le dit SGSN est prévu pour gérer l'établissement de communication dans les couches inférieures.

10. Système selon une quelconque des revendications précédentes, **caractérisé en ce qu'**on attribue à au moins un des terminaux mobiles une adresse « aux soins de » pour la réception de données.

11. Procédé de transmission de données dans un système de transmission radio mobile cellulaire pour transmission d'un trafic vocal et de données, le dit système ayant un réseau d'accès radio terrestre reliant une pluralité de terminaux mobiles (TE) à un réseau de base fixe via une pluralité de stations de base (BTS), le dit réseau d'accès radio terrestre étant un réseau d'accès radio tel que Système Global pour Communication Mobile GSM, Service Général de Radio par Paquets GPRS, avec une fonctionnalité liée à la distribution de clés pour autorisation, authentification et chiffrement, gestion d'informations d'abonné et génération de CDR, **caractérisé en ce qu'**on utilise des Protocoles Internet IP pour la fourniture de services à base de données, **en ce qu'**on utilise à la fois le Système de Télécommunication Mobile Universel UMTS, un Réseau d'Accès Radio Terrestre UTRAN et GSM/GPRS pour l'accès radio entre terminaux mobiles (TE) et stations de base (BTS), **en ce que** les IP sont utilisés par les réseaux de base et d'accès pour la fourniture de services à base de données, et **en ce que** les données sont envoyées via le dit réseau de base par utilisation d'un protocole « Mobile IP », la dite fonctionnalité de GSM/GPRS étant combinée avec le dit protocole pour fourniture de services à base de données et la gestion de macro mobilité pour former un réseau de base efficace et sûr pour des utilisateurs de mobile.

12. Procédé selon la revendication 11, **caractérisé en ce que** les données sont envoyées sur le dit réseau de base par utilisation d'un protocole « Mobile Ipv6 ».

13. Procédé selon la revendication 11, **caractérisé en ce qu'**on attribue à au moins un des terminaux mobiles une adresse « aux soins de » pour la réception de données.

14. Procédé selon une quelconque des revendications 11 à 13, **caractérisé en ce qu'**un terminal mobile est en écoute, lorsqu'il arrive dans un UTRAN, pour des messages diffusés envoyés par le dit UTRAN et contenant des informations au sujet de paramètres de radio, identité de réseau et de cellule, réseau de base accessible, fournisseurs de service disponibles et possibilités de services, et **en ce que** le dit terminal mobile envoie une demande pour enregistrement incluant les paramètres d'identité de terminal mobile et de fournisseur de service désiré.

15. Procédé selon la revendication 14, **caractérisé en ce que** le dit UTRAN transmet la dite demande pour enregistrement à un Noeud de Support GPRS de Service, SGSN.

16. Procédé selon la revendication 15, **caractérisé en ce que** le dit SGSN collecte les données provenant du Registre de Position de Départ HLR du dit terminal mobile, et **en ce que** le dit SGSN vérifie le dit terminal mobile.

17. Procédé selon la revendication 16, **caractérisé en ce que** toutes les informations qui sont envoyées sur le dit réseau d'accès radio sont cryptées par utilisation de clés de chiffrement fournies par le dit HLR.

18. Procédé selon la revendication 17, **caractérisé en ce qu'**un nombre aléatoire est envoyé à un terminal mobile, et **en ce que** le dit terminal mobile établit une clé de chiffrement à partir du dit nombre aléatoire à l'aide d'un algorithme qui est stocké dans le dit terminal mobile afin d'éviter l'envoi de clés de chiffrement sur le dit réseau d'accès radio.

19. Procédé selon la revendication 18, **caractérisé en ce que** le dit terminal mobile est en contact avec un serveur de Protocole de Contrôle d'Hôte Dynamique DHCP et obtient une adresse « aux soins de » à partir de ce serveur.

20. Procédé selon la revendication 18, **caractérisé en ce que** le dit terminal mobile est en contact avec un Agent de Base et enregistre son adresse « aux soins de ».

21. Procédé selon la revendication 20, **caractérisé en ce que** le dit Agent de Base est en contact avec le dit HLR et vérifie que le dit terminal mobile est correctement enregistré et obtient des clés qui sont nécessaires pour l'authentification de IPsec et « l'encapsulage de charge utile de sécurité ».

22. Procédé selon la revendication 21, **caractérisé en ce que** le dit SGSN est en contact avec le dit HLR via un réseau international SS7.

23. Procédé selon la revendication 22, **caractérisé en ce que** le dit SGSN est en contact avec le dit HLR par des messages de protocole MAP à effet tunnel sur Internet.
